(19) Europäisches Patentamt / European Patent Office / Office européen des brevets

(11) **EP 2 829 782 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **13177523.1**

(22) Anmeldetag: **23.07.2013**

(51) Int Cl.:
*F16L 17/035* (2006.01)    *F16L 47/28* (2006.01)
*F16J 15/02* (2006.01)    *F16L 17/025* (2006.01)
*F16L 47/30* (2006.01)    *F16L 41/12* (2006.01)

(54) **Sattel für einen Abzweigungsanschluss**

Saddle for a branch connection

Selle pour un raccord de dérivation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.01.2015 Patentblatt 2015/05**

(73) Patentinhaber: **Georg Fischer Rohrleitungssysteme AG**
**8201 Schaffhausen (CH)**

(72) Erfinder:
• **Raible, Moritz**
**88662 Überlingen (DE)**
• **Paul, Wolfgang**
**78244 Gottmadingen (DE)**

• **Rösch, Jürgen**
**79853 Lenzkirch (DE)**
• **Wermelinger, Jörg**
**8200 Schaffhausen (CH)**

(74) Vertreter: **Fenner, Seraina**
**Georg Fischer AG**
**Amsler-Laffon-Strasse 9**
**8201 Schaffhausen (CH)**

(56) Entgegenhaltungen:
**EP-A1- 2 090 816**    **AU-A1- 2010 200 139**
**CH-A5- 589 250**    **DE-B- 1 111 469**
**DE-C1- 3 213 212**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen Sattel insbesondere einen Klemmsattel für Kunststoffrohre enthaltend einen Abzweigansatz, ein Sattelstück, Mittelachsen (X), (Y) und (Z) und eine Nut zur Anordnung einer Dichtung sowie eine Anordnung enthaltend den Sattel und die Dichtung. Sättel dieser Art sind aus dem Stand der Technik bekannt. Sie dienen dem Anschliessen von Abzweigrohren an medienführende Rohre. Meist werden dazu Anbohrarmaturen eingesetzt die mit Hilfe solcher Sättel am medienführenden Rohr befestigt werden, sei es durch Klemmen oder durch eine andere Befestigungsmöglichkeit. Weiter dienen solche Sättel auch dem Anschluss der abzweigenden Leitungen oder weiteren Armaturen wie Ventile usw.

Die CH 589 250 offenbart ein Abzweigungsanschlussstück, welches sich aus einer unteren Halbschale und dem Sattel bzw. oberen Halbschale zusammensetzt, die sich um die Basisrohrleitung klemmen lassen. Im Sattel bzw. der oberen Halbschale verläuft eine Dichtung um die Anschlussöffnung für die Abzweigung herum. Sie dient der Abdichtung des Spalts zwischen Sattel und Basisrohrleitung.

Nachteilig an solchen Systemen die einen O-Ring zur Abdichtung verwenden ist Bei Dichtungsnuten in Sätteln die aus dem Stand der Technik bekannt sind verlaufen die beiden Seitenwangen über den gesamten Verlauf der Nut parallel zur Mittelachse des Abzweiganschlusses. Durch den Verlauf der Nut entlang der Krümmung im Sattels verändert sich die Querschnittsfläche der Nut sowie die Querschnittskontur selbiger. Das bedeutet beispielsweise, dass die Nut in der Sattelschnittebene 90° zur Rohrleitungsachse eine andere Querschnittsfläche und Querschnittskontur aufweist als in der Sattelschnittebene entlang der Rohrleitungsachse. Das wiederum hat zur Folge, dass an den Extrempunkten des Nutverlaufs, die entlang der Sattelschnittebene, 90° zur Rohrleitung liegen, der O-Ring seitlich ausgespült werden kann, da dort der Winkel zwischen Aussenwange der Nut und der Tangente zur Rohrleitungsaussenfläche maximal spitz ist, was das Ausspülen an dieser Position begünstigt. Des Weiteren hält die Innenwange der Nut den O-Ring davon ab, sich den für ihn geometrisch optimalen Bedürfnissen anpassen zu können. Ein optimaler Verlauf einer Dichtung für einen O-Ring wäre, dass die beiden Wangen der Nut über den gesamten Nutverlauf senkrecht zur Aussenfläche der Rohrleitung stünden an der der Sattel befestigt wird. Aufgrund der dessen entstehenden konstanten Querschnittskontur und Querschnittsfläche würden überall dieselben Druckverhältnisse auf die Dichtung auftreten sowie die Dichtung die Möglichkeit hätte sich entsprechend ihrer Bedürfnisse optimal in der Nut auszubreiten, ohne an vereinzelten Stellen zusätzlich beengt oder gequetscht zu werden.

Leider ist eine solche Nut bzw. ein Sattel mit einer solchen Nut nur sehr schwer bzw. gar nicht durch das Spritzgussverfahren herstellbar, da das Entformen der Kerne durch den Verlauf der Aussenwange, welche eine Hinterschnitt bildet, problematisch bis unmöglich ist.

Die EP 2 090 816 B1 offenbart eine Dichtung, welche der Abdichtung eines Rohres und einer daran anzuschliessenden Anbohrschelle dient. Durch die Vorkrümmung der Dichtung, sollen Stauchungen der Dichtung vermeiden werden und dadurch eine Spaltenbildung verhindert werden. Zudem soll die spezifische Ausgestaltung dieser Dichtung die Dichtheit gewährleisten. Nachteilig an dieser Dichtung sind die hohen Montageanforderungen, damit die Dichtung richtig verbaut wird.

AU 2010 200 139A1, DE 11 11 469 B und DE weisen ebenfalls Sättel zum Anschliessen an Rohrleiungen auf und entsprechende Dichtungen mit den dafür vorgesehenen Nuten, wobei kaum eine optimale Dichtheit bei erhöhten Innendrücken gewährleistet werden kann.

Es ist Aufgabe der Erfindung einen Sattel und eine damit verbundene Dichtung sowie dessen Anordnung vorzuschlagen, die eine optimale Dichtheit auch bei steigenden Innendrücken zwischen Sattel und Rohr gewährleistet sowie das Ausspülrisiko der Dichtung wesentlich verringert. Zudem gewährt die vorliegende Erfindung ein besseres Dichtverhalten beim Abheben des Sattels, was aufgrund ansteigendem Innendruck oder Änderung des thermischen Zustands auftreten kann.

Diese Aufgabe wird erfindungsgemäss dadurch gelöst, dass die Innenwange der Nut über den gesamten Verlauf der Nut senkrecht zur Innenfläche des Sattelstücks angeordnet ist, wobei die Aussenwange der Nut an keiner Position des gesamten Verlaufs der Nut parallel zur Innenwange verläuft. Dadurch wird die Dichtung an keiner Stelle gequetscht oder gestaucht, dass die Funktion der Dichtung nicht mehr gewährleistet wäre. Die Bedingungen für die Dichtung sind somit an jeder Position des Nutverlaufs dieselben. Die Innenfläche des Sattelstücks entspricht der Aussenfläche des Rohres an dem der Sattel befestigt wird, wodurch die Innenwange ebenfalls senkrecht auf die Aussenfläche des Rohres gerichtet ist. Der Sattel ist vorzugsweise aus Kunststoff und insbesondere durch das Spritzgussverfahren hergestellt. Bevorzugte Kunststoffe die dafür eingesetzt werden sind technische Kunststoffe insbesondere POM, PP GF 30 oder PVC.

Eine bevorzugte Ausführungsform besteht darin, dass die Kontur des Nutquerschnitts bzw. die Form über den gesamten Verlauf der Nute konstant ist. Die Form der Nut ist somit an jeder Position dieselbe, wodurch die entsprechende Dichtung konstante Voraussetzungen erhält. Der Druck auf die Dichtung ist somit überall gleich, wodurch kritische Stellen an denen die Dichtung zum Herausspülen tendiert wie sie aus dem Stand der Technik bekannt sind, vermieden werden können. Gemäss einer bevorzugten Ausführungsform verläuft die Aussenwange der Nut an den beiden äusseren Extrempunkten parallel zur Mittelachse (Y) des Sattels, wobei die Extrempunkten auf der Mittelachse (X) liegen bzw. in der Schnittebene des Sattels 90° zur Achse des Rohres, an welches der Sattel befestigt ist. Ausgehend von den beiden Extrempunkten, die die Aussenwange definieren und in Verbindung mit der Innenwange die Querschnittskontur und die Fläche vorgeben, verläuft die Nut konstant entlang der Innenfläche des Sattelstücks. Entsprechend der Sattelgrösse bzw. der Grösse des anzuschliessende Abzweigrohres und dessen Bohrung sowie des Rohrdurchmessers des Rohres an dem der Sattel befestigt wird, ergibt sich die Querschnittskontur der Nut und somit auch die der entsprechenden Dichtung. Vorzugsweise wird der Winkel $\alpha$, der durch die Innenwange und Aussenwange gebildet wird, über die Funktion $\alpha$ = arcsin ((Innendurchmesser Anschlussrohr (d2)) / (Aussendurchmesser Rohr an dem der Sattel angebracht wird (D1))) + ca.5° definiert. Abhängig von dem Rohraussendurchmesser des Rohres an dem der Sattel befestigt ist und dem Innendurchmesser des anzuschliessenden Rohres bzw. des Innendurchmesser des Abzweigansatzes des Sattels ergibt sich nun der Winkel $\alpha$. Die 5° rühren daher, dass die Nut konzentrisch, radial versetzt zum Innendurchmesser des anzuschliessenden Rohres angeordnet ist, um nicht direkt die Mantelfläche der Bohrung zu tangieren. Selbstverständlich kann der konzentrische Versatz zur Mantelfläche der Anschlussbohrung der Nut auch kleiner oder grösser sein als 5° vorzugsweise liegt er in einem Bereich von 2-10°, entsprechen ist die Nut näher oder weiterweg an der Mantelfläche der Bohrung, die durch den Sattel entlang der Mittelachse (Y) ragt.

Vorzugsweise beträgt der Winkel $\alpha$, zwischen Innenwange der Nut und Aussenwange, über den gesamten Verlauf der Nut mindestens 20°. Zudem hat sich gezeigt, dass der Winkel den Betrag von 45° nicht überschreitet. Wie zuvor bereits erwähnt ist die Querschnittskontur und somit auch die Querschnittsfläche der Nut abhängig von der Dimension des Sattels bzw. der Anordnung der Nut in Bezug auf die Mittelachse (Y) des Sattels sowie des Durchmessers des Rohres an welchem der Sattel befestigt wird. Somit ergeben sich entsprechend der Baugrössen unterschiedliche Winkel. Zur Definition der Kontur wird vom Extrempunkt ausgegangen, der auf der Schnittebene des Sattels 90° zur Achse des Rohres liegt an dem der Sattel befestigt ist. An dieser Stelle verläuft die Aussenwange parallel zur Achse des Sattels bzw. rechtwinklig auf die quer verlaufende Achse des Rohres. Des Weitern verläuft die Innenwange senkrecht auf die Innenfläche des Sattelstücks bzw. die Aussenfläche des Rohres, wobei in der Regel 1° Abweichung des senkrechten Verlaufs zur optimaleren Entformbarkeit bzw. als Entformungsschläge tolerierbar ist. Die Tiefe der Nut wird entsprechend der Dichtung ausgeführt Durch diese Art der Auslegung der Nut, ergibt sich, dass die Aussenwange über den gesamten Verlauf der Nut an keiner Position parallel zur Innenwange verläuft. Zudem ist ein Ausformen des Sattels im Falle einer Spritzgussfertigung gewährleistet da durch die oben aufgezeigte Auslegung der Nut kein Hinterschnitt entstehen kann.

Die Erfindung zeichnet sich zusätzlich dadurch aus, das die Querschnittfläche konstant ist. Dadurch, dass eine konstante Querschnittsfläche über den gesamten Verlauf der Nut vorhanden ist, wird die Dichtung nirgends ungleich gequetscht oder verformt sowie auch keine unterschiedlichen Druckverhältnisse auftreten die auf die Dichtung wirken.

Zum Erreichen eines einen optimalen Formschlusses entspricht die Innenfläche des Sattelstücks der Aussenfläche des Rohres, an welchem der Sattel bzw. Klemmsattel angeordnet ist.

Die Dichtung weist einen Winkel $\beta$ auf, der dem Winkel $\alpha$ der Nut entspricht.

Des Weiteren wird bei der Montage des Sattels eine Vorspannung auf die Dichtung bewirkt um ein optimales Dichtverhalten zu gewährleisten.

Ein Ausführungsbeispiel der Erfindung wird anhand der Figuren beschrieben, wobei sich die Erfindung nicht nur auf das Ausführungsbeispiel beschränkt. Es zeigen:

Fig. 1      einen Längsschnitt durch einen aus dem Stand der Technik bekannten Sattel mit einer O-Ringdichtung, befestigt an einem Rohr,

Fig. 2      einen Längsschnitt durch einen Sattel der ein theoretisches Optimum einer Nut für die Anordnung einer Dichtung zeigt,

Fig. 3      eine Schnittansicht durch die Schnittebene des erfindungsgemässen Sattels, 90° zur Achse des Rohres an welchem der Sattel befestigt ist,

Fig. 4      eine Schnittansicht durch die Schnittebene des erfindungsgemässen Sattels entlang der Achse des Rohres an welchem der Sattel befestigt ist und

Fig. 5      die Querschnittsfläche der erfindungsgemässen Dichtung.

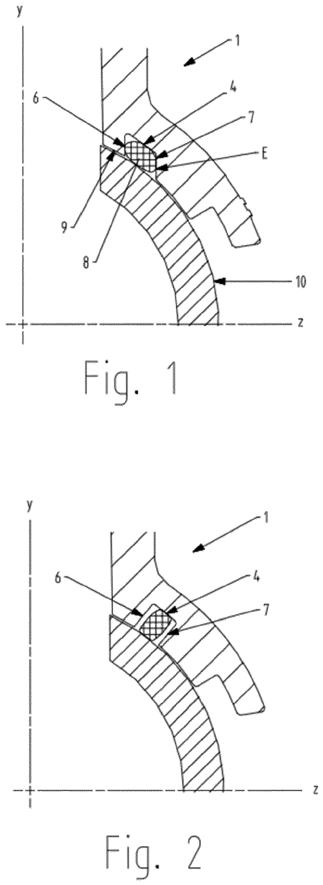

Aus Fig. 1 ist ein Sattel (1) bspw. für eine Anbohrarmatur ersichtlich, die aus dem Stand der Technik bekannt ist. Als Dichtung wird ein O-Ring (8) eingesetzt, wobei auch andere Dichtungen einsatzbar wären die ebenfalls aus dem Stand der Technik bekannt sind. Meist sind solche Sättel (1) aus Kunststoff durch das Spritzgeissverfahren hergestellt. Das wiederum bedingt, dass der Sattel (1) ausformbar ist, bzw. die Kerne entfernt werden können. Aufgrund dessen ist der Verlauf der Innen- und Aussenwange der (6, 7) Nut (4) parallel zueinander und zur Mittelachse (Y) des Sattels (1), das ermöglicht das problemlose Ausformen. Nachteilig ist jedoch die sich daraus ergebende Anordnung des O-Rings (8) in dieser Nut (4). Durch den Verlauf der Nut (4) entlang der Innenfläche (9) des Sattelstücks (3), welche der Aussenfläche (10) des Rohres (5) entspricht verändert sich die Querschnittsfläche sowie die Querschnittskontur der Nut (4) über den Nutverlauf. Bspw. entspricht die Querschnittsfläche und die Kontur der Nut (4) entlang der Schnittebene des Sattels (1) parallel zur Achse (Z) des Rohres nicht derselben Fläche und Kontur wie in Fig. 1 in der die Schnitteben des Sattels (1) 90° zur Rohrachse (Z) dargestellt ist. Durch diese Veränderung der Nut (4) über ihren Verlauf hinweg, unterliegt die Dichtung (8) nicht über den gesamten Verlauf der Nut (4)optimalen Einbaubedingungen. In Fig. 1 ist der Extrempunkt (E) des Nutverlaufs dargestellt. Er liegt auf der Schnittebene des Sattels (1) 90° zur Achse (Z) des Rohres. Der Winkel der an diesem Punkt (E) zwischen Aussenwange (7) und Tangente zur Aussenfläche (10) des Rohres (5) entsteht ist maximal spitz, wodurch der O-Ring (8) unvorteilhaft gequetscht wird. Zudem tendiert der O-Ring (8) an dieser Stelle beim Abheben des Sattels (1) dazu herausgespült zu werden. Die Innenwange (6) der Nut hält den O-Ring (8) davon ab sich optimal nach seinen Bedürfnissen ausrichten zu können. Eine optimale Abdichtung sowie ein Verhindern des Austretens bzw. Ausspülens der Dichtung ist dadurch nicht gewährleistet.

Fig. 2 zeigt eine Nut (4), die für die Anordnung einer Dichtung bzw. eines O-Rings gesamten Verlauf der Nut (4) konstant, wodurch die Dichtung überall den gleichen Bedingungen unterliegt. Diese Form der Nut (4) ist spritzgusstechnisch nicht oder nur mit enorm hohen Aufwand herstellbar, da durch die Ausrichtung der Aussenwange (7) senkrecht auf die Innenfläche (9) des Sattelstücks (3) ein Hinterschnitt entsteht, wodurch das Spritzgussteil nicht mehr ausformbar ist.

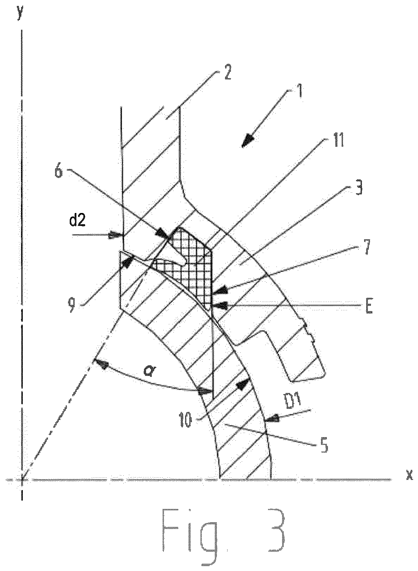

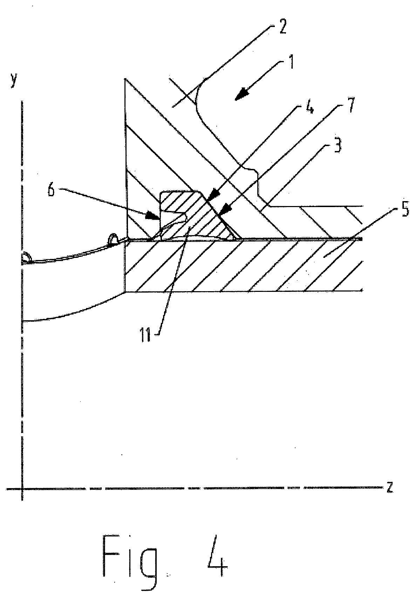

Fig. 3 zeigt die Schnittansicht analog zu Fig. 1 und 2. Daraus ist erkennbar, dass die Innenwange (6) der Nut (4) über den gesamten Nutverlauf senkrecht auf die Innenfläche (9) des Sattelstücks (3) gerichtet ist, was der Dichtung (11) die Möglichkeit der optimalen Entfaltung gibt ohne wie aus dem Stand der Technik bekannt, eingeengt bzw. begrenzt zu werden. Durch die stets konstante Keil-Form der Dichtnut zur Dichtung wird die Vorspannung auf die Dichtung gleichmässig am Umfang verteilt. Zudem ist die Ausformbarkeit gegeben, wenn die Innenwange (6) über den gesamten Verlauf der Nut (4) konstant senkrecht zur Innenfläche (9) des Sattelstücks (3) gerichtet ist. Um die Ausformbarkeit des Sattels (1) auch in Bezug zur Aussenwange (7) zu gewährleisten, verläuft die Aussenwange (7) im Extrempunkt (E) parallel zur Mittelachse (Y) des Sattels (1) wie in Fig. 3 dargestellt wobei eine Toleranz von rund 1° Entformungsschräge vorliegen kann. Ausgehend von dieser Kontur der Nut (4) verläuft die Nut (4) konstant mit derselben Kontur und Fläche, was den Vorteil bringt, dass die Dichtung (11) nirgends ungleichmässig gestaucht oder gequetscht wird. Der Winkel α ergibt sich entsprechend der Anordnung der Innenwange (6) der Nut (4) im Sattelstück (3), die definiert wird durch den Innendurchmessers (d2) der Bohrung des Abzweigansatzes mit der konzentrischen Beabstandung zur Mantelfläche der Bohrung (d2) von ca. 5° und des Durchmessers des Rohres (5) auf dem der Sattel (1) befestigt wird. Selbstverständlich bleib auch der Winkel (α) konstant über den Verlauf der Nut (4). Fig. 4 zeigt den Sattel (1) in einer 90° gedrehten Schnittansicht zu Fig. 3. Daraus ist ersichtlich, dass die Nut (4) auch in dieser Position dieselbe Kontur wie auch dieselbe Querschnittsfläche aufweist.

Der Winkel α ergibt sich somit aus der Funktion: acrsin ((Innendurchmesser Anschlussrohr bzw. Abzweigansatz(2) (d2)) / (Aussendurchmesser (D1) des Rohres (5) auf dem der Sattel (1) angebracht wird) + ca. 5°(Versatz der Innenwange (6) zum Bohrungsmantel entlang der Mittelachse (Y) = α

$$\alpha = \arcsin\,(d2)/(D1) + ca.\ 5°$$

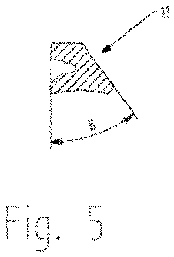

Fig. 5 zeigt die Querschnittsfläche einer erfindungsgemässen Dichtung (11). Die Dichtung ist aus einem flexiblen Kunststoff hergestellt der sich problemlos in die Nut (4) einlegen lässt. Der Winkel α der Nut entspricht dem Winkel β der Dichtung (11). Des Weiteren weist die Dichtung (11) eine Form auf, die es ermöglicht beim Befestigen des Sattels (1) eine Vorspannung auf die Dichtung (11) zu geben. Vorzugsweise ist die Dichtung aus Elastomeren insbesondere EPDM oder FPM hergestellt. Die gesamte Konstelation aus Dichtnut und Dichtung ermöglicht eine nicht vorgespannte Dichtung einzusetzen. Somit ist der Einbau der Dichtung in Bezug auf dessen Position in der Dichtnut unkritisch.

**Bezugszeichenliste**

| 1 | Sattel |
|---|---|
| 2 | Abzweigansatz |
| 3 | Sattelstück |
| 4 | Nut |
| 5 | Rohr |
| 6 | Innenwange Nut |
| 7 | Aussenwange Nut |
| 8 | O-Ring |
| 9 | Innenfläche Sattelstück |
| 10 | Aussenfläche Rohr |
| 11 | Dichtung |
| D1 | Aussendurchmesser des Rohres (5) auf der der Sattel (1) befestigt ist |
| d2 | Innendurchmesser der Bohrung durch den Sattel (1) bzw. Abzweigansatz (2) bzw. des anzuschliessenden Rohres entlang der Mittelachse (Y) |

**Patentansprüche**

1. Sattel (1), insbesondere Klemmsattel für Kunststoffrohre, enthaltend einen Abzweigansatz (2), ein Sattelstück (3), Mittelachsen (X, Y und Z) und eine Nut (4) zur Anordnung einer Dichtung (11), **dadurch ge-**

**kennzeichnet, dass** die Innenwange (6) der Nut (4) über den gesamten Verlauf der Nut (4) senkrecht zur Innenfläche (9) des Sattelstücks (10) angeordnet ist, wobei die Aussenwange (7) der Nut an keiner Position des gesamten Verlaufs der Nut (4) parallel zur Innenwange (6) verläuft.

2. Sattel (1) nach Anspruch 1, **dadurch gekennzeichnet, dass** die Kontur des Nutquerschnitts über den gesamten Verlauf der Nut (4) konstant ist.

3. Sattel (1) nach einem der Ansprüche 1 oder 2, **dadurch gekennzeichnet, dass** die Aussenwange (7) und die Innenwange (6) der Nut (4) eine konstanten Winkel α bilden, der über den gesamten Verlauf der Nut (4) konstant ist.

4. Sattel (1) nach Anspruch 3, **dadurch gekennzeichnet, dass** die Aussenwange (7) der Nut (4) an den beiden äusseren Extrempunkten (E) parallel zur Mittelachse (Y) des Sattels (1) verläuft, wobei die Extrempunkte (E) auf der Mittelachse (X) liegen.

5. Sattel (1) nach einem der Ansprüche 3 bis 4, **dadurch gekennzeichnet, dass** der Winkel α, zwischen Innenwange (6) und Aussenwange (7) der Nut (4) über den gesamten Verlauf der Nut (4) mindestens 20° beträgt.

6. Sattel (1) nach einem der Ansprüche 3 bis 5, **dadurch gekennzeichnet, dass** der Winkel α, zwischen Innenwange (6) und Aussenwange (7) der Nut (4), über den gesamten Verlauf der Nut (4) maximal 45° beträgt.

7. Sattel (1) nach einem der vorangehenden Ansprüche, **dadurch gekennzeichnet, dass** die Querschnittsfläche der Nut (4) über den gesamten Verlauf der Nut (4) konstant ist.

8. Sattel (1) nach einem der vorangehenden Ansprüche, **dadurch gekennzeichnet, dass** die Innenfläche (9) des Sattelstücks (3) der Aussenfläche (10) des Rohres (5) entspricht, an welchem der Sattel (1) bzw. Klemmsattel angeordnet ist.

9. Anordnung, enthaltend einen Sattel (1) nach einem der Ansprüche 3 bis 8 und eine Dichtung (11), wobei die Dichtung (11) in der Nut (4) angeordnet ist, **dadurch gekennzeichnet, dass** die Dichtung (11) einen Winkel β aufweist, der dem Winkel α der Nut (4) entspricht.

## Claims

1. Saddle (1), in particular a clamping saddle for plastics pipes, containing a branch projection (2), a saddle piece (3), centre axes (X, Y and Z), and a groove (4) for the arrangement of a seal (11), **characterized in that** the inner cheek (6) of the groove (4) is arranged, throughout the course of the groove (4), perpendicular to the inner surface (9) of the saddle piece (10), wherein the outer cheek (7) of the groove runs, throughout the course of the groove (4), at no position parallel to the inner cheek (6).

2. Saddle (1) according to Claim 1, **characterized in that** the contour of the groove cross section is constant throughout the course of the groove (4).

3. Saddle (1) according to one of Claims 1 or 2, **characterized in that** the outer cheek (7) and in the inner cheek (6) of the groove (4) form a constant angle α, which is constant throughout the course of the groove (4).

4. Saddle (1) according to Claim 3, **characterized in that** the outer cheek (7) of the groove (4) runs at the two outer extreme points (E) parallel to the centre axis (Y) of the saddle (1), wherein the extreme points (E) lie on the centre axis (X).

5. Saddle (1) according to one of Claims 3 to 4, **characterized in that** the angle α between the inner cheek (6) and the outer cheek (7) of the groove (4) amounts, throughout the course of the groove (4), to at least 20°.

6. Saddle (1) according to one of Claims 3 to 5, **characterized in that** the angle α between the inner cheek (6) and the outer cheek (7) of the groove (4) amounts, throughout the course of the groove (4), to maximally 45°.

7. Saddle (1) according to one of the preceding claims, **characterized in that** the cross-sectional area of the groove (4) is constant throughout the course of the groove (4).

8. Saddle (1) according to one of the preceding claims, **characterized in that** the inner surface (9) of the saddle piece (3) corresponds to the outer surface (10) of the pipe (5) on which the saddle (1) or clamping saddle is disposed.

9. Arrangement, containing a saddle (1) according to one of Claims 3 to 8 and a seal (11), wherein the seal (11) is disposed in the groove (4), **characterized in that** the seal (11) has an angle β which corresponds to the angle α of the groove (4).

## Revendications

1. Selle (1), en particulier selle de serrage pour des tubes en matière plastique, contenant une tête de dérivation (2), une pièce de selle (3), des axes centraux (X, Y et Z) et une rainure (4) pour l'agencement d'un joint d'étanchéité (11), **caractérisée en ce que** la joue intérieure (6) de la rainure (4) est disposée sur tout le tracé de la rainure (4) perpendiculairement à la face intérieure (9) de la pièce de selle (10), dans laquelle la joue extérieure (7) de la rainure n'est en aucun endroit de tout le tracé de la rainure (4) parallèle à la joue intérieure (6).

2. Selle (1) selon la revendication 1, **caractérisée en ce que** le contour de la section transversale de la rainure est constant sur tout le tracé de la rainure (4).

3. Selle selon une des revendications 1 ou 2, **caractérisée en ce que** la joue extérieure (7) et la joue intérieure (6) de la rainure (4) forment un angle $\alpha$ constant, qui est constant sur tout le tracé de la rainure (4).

4. Selle (1) selon la revendication 3, **caractérisée en ce que** la joue extérieure (7) de la rainure (4) s'étend aux deux points extrêmes extérieurs (E) parallèlement à l'axe central (Y) de la selle (1), dans laquelle les points extrêmes (E) sont situés sur l'axe central (X).

5. Selle (1) selon une des revendications 3 à 4, **caractérisée en ce que** l'angle $\alpha$, entre la joue intérieure (6) et la joue extérieure (7) de la rainure (4), vaut au moins 20° sur tout le tracé de la rainure (4).

6. Selle (1) selon l'une quelconque des revendications 3 à 5, **caractérisée en ce que** l'angle $\alpha$, entre la joue intérieure (6) et la joue extérieure (7) de la rainure (4), vaut au maximum 45° sur tout le tracé de la rainure (4).

7. Selle (1) selon l'une quelconque des revendications précédentes, **caractérisée en ce que** l'aire de la section transversale de la rainure (4) est constante sur tout le tracé de la rainure (4).

8. Selle (1) selon l'une quelconque des revendications précédentes, **caractérisée en ce que** la face intérieure (9) de la pièce de selle (3) correspond à la face extérieure (10) du tube (5), sur laquelle la selle (1) ou la selle de serrage est agencée.

9. Agencement, contenant une selle (1) selon l'une quelconque des revendications 3 à 8 et un joint d'étanchéité (11), dans lequel le joint d'étanchéité (11) est agencé dans la rainure (4), **caractérisé en ce que** le joint d'étanchéité (11) présente un angle $\beta$, qui correspond à l'angle $\alpha$ de la rainure (4).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 589250
- EP 2090816 B1
- AU 2010200139 A1
- DE 1111469 B